# EUROPEAN PATENT APPLICATION

(11) **EP 4 253 476 A1**
(43) Date of publication of application: **04.10.2023**
(21) Application number: 21932637.8
(22) Date of filing: 02.11.2021
(51) Int. Cl.: C08L 27/06, C08J 9/12

(54) **CROSSLINKED POLYVINYL CHLORIDE STRUCTURE FOAMED MATERIAL AND PREPARATION METHOD THEREFOR**

(30) Priority: 25.03.2021 CN 202110319473
(71) Applicant: Changchun Institute Of Applied Chemistry Chinese Academy Of Sciences, Changchun, Jilin 130022 (CN)
(72) Inventor: TANG, Tao, Changchun, Jilin 130022 (CN); YOU, Jiangan, ChangChun, Jilin 130022 (CN); JIANG, Zhiwei, ChangChun, Jilin 130022 (CN); XUE, Jian, ChangChun, Jilin 130022 (CN); JIANG, Hanqing, ChangChun, Jilin 130022 (CN); QIU, Jian, ChangChun, Jilin 130022 (CN); XING, Haiping, ChangChun, Jilin 130022 (CN); LI, Minggang, ChangChun, Jilin 130022 (CN)
(74) Representative: V.O.
(86) International application number: PCT/CN2021/128051
(87) International publication number: WO 2022/199029

(57) **Abstract**

The present invention provides a method for preparing a crosslinked polyvinyl chloride structure foamed material by using a physical foaming agent, comprising: melting and mixing a polyvinyl chloride resin, a modified resin, an isocyanate, an anhydride, a nucleating agent and a heat stabilizer to obtain a blank; immersing the blank into a foaming gas for foaming to obtain a foamed body; and subjecting the foamed body to crosslinking curing to obtain a crosslinked polyvinyl chloride structure foamed material. According to the present invention, the crosslinked polyvinyl chloride structure foamed material is prepared by means of a brand-new process route, and the composition and proportion of the PVC resin and other raw materials can be adjusted in a wide range; according to the present invention, carbon dioxide or nitrogen is used for foaming, such that the preparation process of the PVC foam is safer and more environmentally friendly, and the cost can be reduced; the foamed material prepared by the present invention has a high glass transition temperature and a good heat resistance; and the preparation process of the present invention improves the compatibility or intersolubility of PVC and other raw materials, and the material performance is better. The present invention also provides a crosslinked polyvinyl chloride structure foamed material.

## Description

### CROSS REFERENCE TO RELATED APPLICATIONS

This application claims the priority of Chinese Patent Application No. 202110319473.8, filed with the China National Intellectual Property Administration on March 25, 2021, and titled with "CROSSLINKED POLYVINYL CHLORIDE STRUCTURE FOAMED MATERIAL AND PREPARATION METHOD THEREFOR", which is hereby incorporated by reference in its entirety.

### FIELD

The present invention belongs to the technical field of foam materials, and in particular to a crosslinked polyvinyl chloride structural foam material and a preparation method thereof.

### BACKGROUND

Foam composite material having a sandwich structure is a material having a sandwich structure formed by using a resin-based composite material as a skin and a polymer foam as a core material. Due to its excellent features such as high strength, light weight, high rigidity, corrosion resistance, electrical insulation, and microwave permeability, it is more and more widely used in special-shaped parts such as missile wings, helicopter sidewall panels, and wind rotor blades in the aerospace industry. The foamed core materials currently used in a sandwich structure mainly include foams such as a crosslinked polyvinyl chloride (PVC) structural foam, polystyrene (PS), a polyurethane foam (PUF), styrene-acrylonitrile (SAN), polyetherimide (PEI) and polymethacrylimide (PMI). Among them, the crosslinked polyvinyl chloride (PVC) structural foam is widely used in many fields, such as wind power, rail transportation, construction, building materials, decoration, furniture, advertising, and automobiles, due to its stable performance, uniform texture, good dynamic and static properties, corrosion resistance to various chemical substances, applicability for parts with high loading requirements, and moderate price.

The components of crosslinked polyvinyl chloride (PVC) structural foam in the prior art mainly include a PVC paste resin, isocyanate, anhydride, and a chemical foaming agent. The preparation method thereof comprises: first mixing solid materials and liquid materials to obtain a paste material; then pressurizing and heating the paste material in a sealed mold, the PVC paste material in the mold being gelled; then decomposing the material with a foaming agent; after relieving the pressure and cooling, opening the mold to obtain a primary foamed body containing many cells; then subjecting the primary foamed body to a secondary foaming and expansion in the presence of water, and simultaneously performing crosslinking and curing to finally obtain a foam with high strength. In the prior art, for the convenience of operation, a PVC paste resin is generally used as a PVC raw material for the production of a crosslinked polyvinyl chloride structural foam, and the mixed material is required to be filled into the mold in a state of paste, so a liquid raw material is required. In addition, the content of isocyanate is high, resulting in the limitation on adjustable range of the formula composition ratio, which further limits the space for adjusting the foam performance. Moreover, the use of PVC paste resin reduces the adaptability of raw materials, and the cost is also high.

In the prior art, azobisisobutyronitrile (AIBN) is generally used as a chemical foaming agent, but AIBN is an explosive and toxic reagent, which has environmental and safety hazards, and the manufacturing cost is increased to prevent safety hazards. Moreover, the AIBN foaming process requires a mold able to seal a pressure of 10-30 MPa. Although organic small molecules with low boiling points such as cyclopentane can be used as a foaming agent to replace azobisisobutyronitrile to prepare crosslinked PVC structural foams, or expanded microspheres can be added in the formula to reduce the amount of AIBN used and the foaming pressure, the requirements for the foaming process are still high.

In the prior art, azodicarbonamide (AC) is generally used as a nucleating agent in the preparation of crosslinked polyvinyl chloride structural foam, but the nucleating agent will remain in the system, which does not meet environmental protection requirements. The use of sodium bicarbonate and potassium bicarbonate to replace AC cannot realize good dispersion of the nucleating agent in the system, eventually affecting the nucleating efficiency of the nucleating agent and the uniformity of the cell structure.

In the prior art, for the preparation of crosslinked polyvinyl chloride structural foam, the mixed material is required to be heated to 170-175°C in the mold, then kept for enough time to complete the plasticization of the core material of the mold, and cooled to room temperature to open the mold. In actual production, there is a process of repeated heating and cooling, which consumes high energy. Moreover, a long time of high temperature puts forward higher requirements on the thermal stability of the system, which limits the adjustment of the formula. In addition, when the mixture is heated in the mold, only liquid components penetrate into the PVC resin particles, thereby limiting the degree of fusion between various components, and affecting the final performance of the material.

### SUMMARY

In view of this, the object of the present invention is to provide a crosslinked polyvinyl chloride structural foam and a preparation method thereof. The method provided by the present invention is simple in process, safe and environmentally friendly, and low in cost, and the prepared foam material has good performance.

The present invention provides a method for preparing a crosslinked polyvinyl chloride structural foam material, comprising:
melting and mixing a polyvinyl chloride resin, a modified resin, an isocyanate, an anhydride, a nucleating agent and a heat stabilizer to obtain a blank;
immersing the blank into a foaming gas for foaming to obtain a foamed body; and
subjecting the foamed body to crosslinking and curing to obtain a crosslinked polyvinyl chloride structural foam material.

Preferably, the modified resin is selected from the group consisting of polymethyl methacrylate, methyl methacrylate-butyl acrylate copolymer, styrene-acrylonitrile copolymer, chlorinated polyvinyl chloride, chlorinated polyethylene, thermoplastic polyurethane and a mixture thereof.

Preferably, the isocyanate is selected from the group consisting of toluene diisocyanate, carbodiimide-uretonimine modified 4,4'-diphenylmethane diisocyanate, polymethylene polyphenyl polyisocyanate and a mixture thereof.

Preferably, the anhydride is selected from the group consisting of phthalic anhydride, maleic anhydride, succinic anhydride, tetrahydrophthalic anhydride, hexahydrophthalic anhydride, methyl tetrahydrophthalic anhydride, methyl hexahydrophthalic anhydride, trimellitic anhydride, pyromellitic dianhydride and a mixture thereof.

Preferably, the nucleating agent is selected from the group consisting of nano silicon dioxide, carbon black, calcined kaolin, molecular sieve, ultrafine aluminum silicate, calcium carbonate, glass powder and a mixture thereof.

Preferably, the heat stabilizer is selected from the group consisting of calcium stearate, zinc stearate, barium stearate, organotin heat stabilizer, tribasic lead sulfate, dibasic lead phosphite, epoxy soybean oil, epoxy resin and a mixture thereof.

Preferably, the foaming gas is selected from carbon dioxide or nitrogen.

Preferably, the foamed body is obtained by:
under the action of pressure, immersing the blank in a foaming gas, and then relieving the pressure to obtain a foamed body;
wherein the pressure is 6-15 MPa.

Preferably, a mass ratio of the polyvinyl chloride resin, modified resin, isocyanate, anhydride, nucleating agent and heat stabilizer is 100:(0-50):(30-150):(0-80):( 0-5): (1-5).

The present invention provides a crosslinked polyvinyl chloride structural foam material prepared by the method described in the above technical solution.

The method for preparing a crosslinked polyvinyl chloride structural foam material provided by the present invention has significant advantages. The foaming method adopted in the present invention is not limited by the technical requirements for paste materials in the prior art, and foaming can be realized by mixing polymers with different properties. The method of melting and mixing and physical foaming by gas adopted in the present invention greatly improves the fusion between various components, and improves the glass transition temperature of the foam material and the uniformity of the cell structure. In the present invention, during the whole process of the preparation of a crosslinked polyvinyl chloride structural foam material, the duration of the high-temperature heating experienced by PVC is greatly shortened, and the thermal stability requirements for the system are greatly reduced. The present invention uses a foaming gas such as carbon dioxide or nitrogen as a foaming agent, and an inorganic component as a nucleating agent, causing no AIBN decomposition residue and AC residue, the process and product are environmentally friendly, and the cost is low. In the preparation method of the present invention, the melting and mixing time is short, the foaming temperature is low for immersing with a foaming agent, greatly reducing the overall energy consumption of the process.

### BRIEF DESCRIPTION OF DRAWINGS

FIG. 1 is a scanning electron micrograph of the foam material prepared in Comparative Example 1 of the present invention;
FIG. 2 is a dynamic thermomechanical analysis curve of the foam material prepared in Comparative Example 1 of the present invention;
FIG. 3 is a scanning electron micrograph of the foam material prepared in Example 1 of the present invention;
FIG. 4 is a dynamic thermomechanical analysis curve of the foam material prepared in Example 1 of the present invention.

### DETAILED DESCRIPTION

The technical solutions in the examples of the present invention will be clearly and completely described below. Apparently, the described examples are only some of the embodiments of the present invention, but not all of them. Based on the examples of the present invention, all other examples improved or modified by those of ordinary skill in the art belong to the protection scope of the present invention. It should be understood that the examples of the present invention are only used to illustrate the technical effect of the present invention, and are not used to limit the protection scope of the present invention. In the examples, the methods used are conventional methods unless otherwise specified.

The present invention provides a method for preparing a crosslinked polyvinyl chloride structural foam material, comprising:
melting and mixing a polyvinyl chloride resin, a modified resin, an isocyanate, an anhydride, a nucleating agent and a heat stabilizer to obtain a blank;
immersing the blank into a foaming gas for foaming to obtain a foamed body; and
subjecting the foamed body to crosslinking and curing to obtain a crosslinked polyvinyl chloride structural foam material.

In the prior art, PVC resin (polyvinyl chloride resin, also known as PVC paste resin) produced by emulsion polymerization process is generally used as one of the main raw materials to prepare a crosslinked polyvinyl chloride structural foam. Compared with PVC paste resin, loose PVC resin (also known as PVC suspension resin) produced by suspension polymerization process has the advantage of low cost. In the prior art, the polyvinyl chloride resin used in the preparation of crosslinked polyvinyl chloride structural foam is generally a PVC paste resin rather than a loose PVC suspension resin. This is because the loose PVC suspension resin has high oil absorption value and strong liquid absorption capacity, and when the solid material and the liquid material are mixed, only a wet powder material can be formed instead of a uniform paste material. If this wet powder material is directly put into a mold for molding, the liquid material in the powder material will flow out from the mold gap.

The present invention adopts a brand-new preparation process route. The first step is a melting and mixing process, which can quickly realize the plasticization process of PVC, replacing the plasticization process in the prior art that relies on long-term static temperature rise to complete the absorption of liquid materials by PVC resin particles. The technical method provided by the present invention has no special requirements on PVC resin, and low-priced PVC suspension resin can be used, which significantly reduces the cost of raw materials.

In the present invention, the modified resin is preferably selected from the group consisting of polymethyl methacrylate, methyl methacrylate-butyl acrylate copolymer, styrene-acrylonitrile copolymer, chlorinated polyvinyl chloride, chlorinated polyethylene, thermoplastic polyurethane and a mixture thereof. In the present invention, the modified resin can adjust the performance of the prepared PVC structural foam material, whereas in the prior art, it is difficult to add the above-mentioned modified resin to the PVC structural foam in the preparation of PVC structural foam material. In the present invention, the modified resin can be added to the PVC structural foam by a melting and mixing process, so as to realize the adjustment of the structure and performance of the foam.

In the present invention, the isocyanate is preferably selected from the group consisting of toluene diisocyanate (TDI), carbodiimide-uretonimine modified 4,4'-diphenylmethane diisocyanate (CD-MDI) , polymethylene polyphenyl polyisocyanate (PMDI) and a mixture tehreof.

In the present invention, the anhydride is preferably selected from the group consisting of phthalic anhydride (PA), maleic anhydride (MA), succinic anhydride (SA), tetrahydrophthalic anhydride (THPA), hexahydrophthalic anhydride (HHPA), methyl tetrahydrophthalic anhydride (MTHPA), methyl hexahydrophthalic anhydride (MHHPA), trimellitic anhydride (TMA), pyromellitic dianhydride (PDMA) and a mixture thereof.

In the present invention, the nucleating agent is preferably selected from the group consisting of nano silicon dioxide, carbon black, calcined kaolin, molecular sieve, ultrafine aluminum silicate, calcium carbonate, glass powder and a mixture thereof.

In the present invention, the heat stabilizer is preferably selected from the group consisting of calcium stearate, zinc stearate, barium stearate, organotin heat stabilizer, tribasic lead sulfate, dibasic lead phosphite, epoxy soybean oil, epoxy resin and a mixture thereof.

In the present invention, a mass ratio of the polyvinyl chloride resin, modified resin, isocyanate, anhydride, nucleating agent and heat stabilizer is preferably 100: (0-50): (30-150): (0-80 ): (0-5): (1-5), more preferably 100: (10-40): (50-120): (10-60): (1-4): (2-4), most preferably 100: (20-30): (80-100): (20-50): (2-3): 2.5.

In the present invention, the melting and mixing is carried out at preferably 130-170°C, more preferably 140-160°C, and most preferably 150°C.

In the present invention, the foamed body is preferably obtained by:
under the action of pressure, immersing the blank in a foaming gas, and then relieving the pressure to obtain a foamed body.

In the present invention, the foamed body is more preferably obtained by:
under the action of pressure, placing the blank in a sealed cavity, immersing it in a foaming gas, and then relieving the pressure to obtain a foamed body.

In the present invention, the foamed body is most preferably obtained by:
under the action of temperature and pressure, immersing the blank in a foaming gas, and then relieving the pressure to obtain a foamed body.

In the present invention, the temperature is preferably 25-125°C, more preferably 40-110°C, more preferably 60-95°C, more preferably 70-85°C, most preferably 75-80°C. In the present invention, the pressure is preferably 6-15 MPa, more preferably 10-13 MPa.

In the present invention, the foaming gas is preferably carbon dioxide or nitrogen.

In the present invention, before relieving the pressure, the pressure is maintained for preferably 20-50 min/mm (20-50 min for each millimeter-thick blank), more preferably 30-40 min/mm.

In the present invention, relieving the pressure is a process of discharging the foaming gas.

In the present invention, before the crosslinking and curing, it preferably also comprises:
expanding the foamed body.

In the present invention, the expansion is preferably carried out in hot air, hot water or saturated water vapor; and the expansion is carried out at preferably 70-99°C, more preferably 75-95°C, more preferably 80-95°C, most preferably 85-95°C.

In the present invention, the crosslinking and curing are preferably carried out in saturated water vapor or hot water; the crosslinking and curing are carried out at preferably 40-70°C, more preferably 50-60°C; and the crosslinking and curing are performed for preferably 4-6 days, more preferably 5 days.

The method for preparing a crosslinked polyvinyl chloride structural foam material provided by the present invention has significant advantages. The foaming method adopted in the present invention is not limited by the technical requirements for paste materials in the prior art, and foaming can be realized by mixing polymers with different properties. The method of melting and mixing adopted in the present invention greatly improves the fusion between various components, and improves the glass transition temperature of the foam material and the uniformity of the cell structure. In the present invention, during the whole process of the preparation of a crosslinked polyvinyl chloride structural foam material, the duration of the high-temperature heating experienced by PVC is greatly shortened, and the thermal stability requirements for the system are greatly reduced. The present invention uses a foaming gas such as carbon dioxide or nitrogen as a foaming agent, and an inorganic component as a nucleating agent, causing no AIBN decomposition residue and AC residue, the process and product are environmentally friendly, and the cost is low. In the preparation method of the present invention, the melting and mixing time is short, the foaming temperature is low for immersing with a foaming agent, greatly reducing the overall energy consumption of the process.

The raw materials used in the following examples and comparative examples of the present invention are commercially available products.

### Comparative Example 1

100 g of PVC resin (paste resin), 60 g of PMDI, 30 g of MHHPA, 10 g of AIBN, 2 g of AC (azodicarbonamide), and 2 g of calcium stearate were mixed at room temperature to form a paste material, which was then added into a cavity with a thickness of 12 mm, maintained at 175°C and 16 MPa for 10 min, and cooled to 25°C, and the mold was opened to obtain a primary foamed body. The primary foamed body was put in hot water at 95°C for expansion for 30 min to obtain a secondary foamed body. The secondary foamed body was placed in saturated water vapor at 60°C for crosslinking and curing for 4 days to obtain a crosslinked PVC structural foam material.

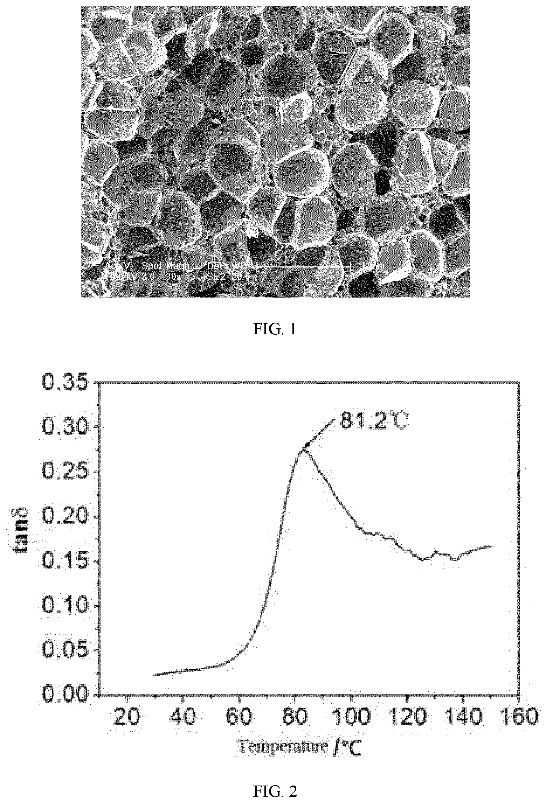

The crosslinked PVC structural foam material prepared in Comparative Example 1 was detected by a scanning electron microscope, and the test results are shown in FIG. 1. The foam material prepared in Comparative Example 1 had a density of 70 kg/cm³ and an average cell size of about 450 µm.

The crosslinked PVC structural foam material prepared in Comparative Example 1 was subjected to dynamic thermomechanical analysis, and the test results are shown in FIG. 2. The foam material prepared in Comparative Example 1 had a glass transition temperature of 81.2°C.

The density (ρ_{f}) of the foam material was determined by a drainage method.

First, the weight m_{f} of the foam sample was measured using an electronic balance, then the foam sample was immersed in water. When the foam sample was just completely immersed in water, the increased weight of the system was determined to be m₀ by using the electronic balance again. Finally ρ_{f} = m_{f} /(m₀/ρ_{water}), where ρ_{water} is the mass density of water.

The cell structure of the foam was photographed by a scanning electron microscope (XL30 ESEM, PHILLIPS), and the average cell diameter was counted by an image processing software (Nano Measurer).

The glass transition temperature of the foam material was obtained by the following: the foam material sample was subjected to a tensile test using a dynamic thermomechanical analyzer (Metravib DMA 450 Newtons) at a frequency of 1.0 Hz, a heating rate of 5°C/min, and a temperature range from room temperature to 150°C to obtain a loss tangent value (tanδ)-temperature curve, and the temperature corresponding to the maximum peak value of the curve was taken to obtain the glass transition temperature of the foam material.

### Example 1

100 g of PVC resin (paste resin), 60 g of PMDI, 30 g of MHHPA, 2.0 g of calcined kaolin, and 2 g of calcium stearate were melted and mixed at 150°C to obtain a blank with a thickness of 6 mm. Then the blank was put into a sealed cavity at 90°C, where carbon dioxide was introduced to raise the pressure to 10 MPa, the pressure was maintained for 120 min, and then the carbon dioxide was discharged to obtain a primary foamed body. The primary foamed body was immersed into hot water at 90°C for secondary expansion for 6 min to obtain a secondary foamed body. The secondary foamed body was placed in saturated water vapor at 60°C for 4 days of crosslinking and curing to obtain a crosslinked PVC structural foam material.

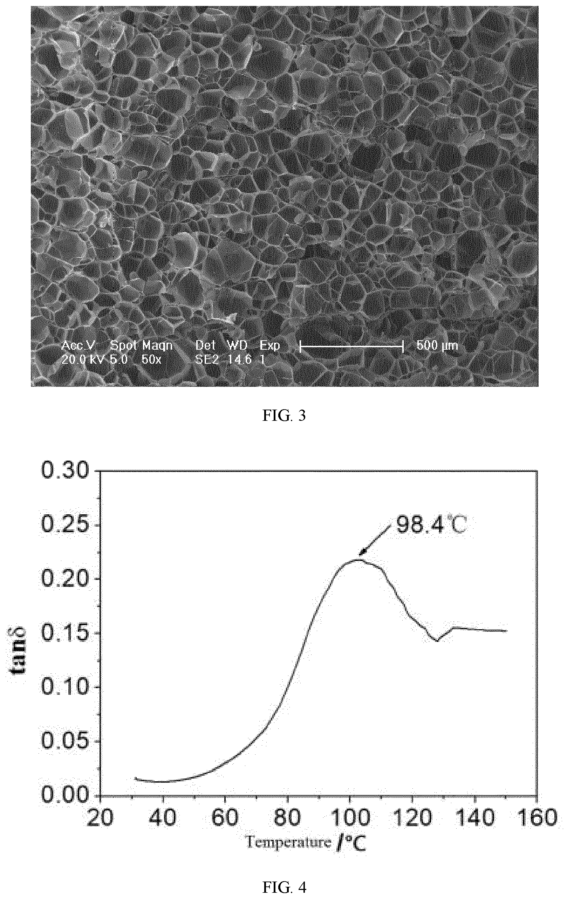

According to the method in Comparative Example 1, the crosslinked PVC structural foam prepared in Example 1 of the present invention was tested, and the test results are shown in FIG. 3. The foam material prepared in Example 1 had a density of 70 kg/cm³ and an average cell size of about 90 µm.

According to the method in Comparative Example 1, the foam material prepared in Example 1 was subjected to dynamic thermomechanical analysis, and the test results are shown in FIG. 4. The foam material prepared in Example 1 had a glass transition temperature of 98.4°C.

Compared with Comparative Example 1, it can be seen that by melting and mixing and foaming by immersion with a physical foaming agent, smaller cell diameters and higher glass transition temperatures can be obtained.

### Example 2

100 g of PVC resin, 30 g of PMMA (polymethyl methacrylate), 100 g of TDI, 60 g of PA, 0.6 g of calcium stearate, 0.4 g of zinc stearate, 1.0 g of nano silicon dioxide, and 0.5 g of molecular sieve were mixed at 150°C to obtain a blank with a thickness of 6 mm. The blank was put into a sealed cavity at 125°C, where carbon dioxide was introduced to raise the pressure to 6 MPa, the pressure was maintained for 120 min, and then the carbon dioxide was discharged to obtain a PVC primary foamed body. The primary foamed body was immersed into hot water at 95°C for secondary expansion for 30 min to obtain a secondary foamed body. The secondary foamed body was placed in hot water at 40°C for 6 days of crosslinking and curing to obtain a crosslinked PVC structural foam material.

According to the method in Comparative Example 1, the crosslinked PVC structural foam prepared in Example 2 of the present invention was tested. The foam material had a density of 50 kg/cm³, an average cell size of about 95 µm, and a glass transition temperature of 100.3°C.

### Example 3

100 g of PVC resin, 10 g of ACR (methyl methacrylate-butyl acrylate copolymer), 120 g of CD-MDI, 30 g of MA, 5.0 g of barium stearate, and 3.0 g of calcined kaolin were melted and mixed at 150°C to obtain a blank with a thickness of 6 mm. The blank was put into a sealed cavity at 25°C, where carbon dioxide was introduced to raise the pressure to 15 MPa, the pressure was maintained for 300 min, and then the carbon dioxide was discharged to obtain a PVC primary foamed body. The primary foamed body was immersed into hot air at 99°C for secondary expansion for 20 min to obtain a secondary foamed body. The secondary foamed body was placed in saturated water vapor at 70°C for 4 days of crosslinking and curing to obtain a crosslinked PVC structural foam material.

According to the method in Comparative Example 1, the crosslinked PVC structural foam prepared in Example 3 of the present invention was tested. The foam material had a density of 33 kg/cm³, an average cell size of about 80 µm, and a glass transition temperature of 94.2°C.

### Example 4

100 g of PVC resin, 10 g of SAN (styrene-acrylonitrile copolymer), 30 g of CD-MDI, 20 g of THPA, 3.0 g of organotin heat stabilizer, 1.0 g of epoxy soybean oil, and 5.0 g of molecular sieve were melted and mixed at 150°C to obtain a blank with a thickness of 6 mm. The blank was put into a sealed cavity at 95°C, where nitrogen was introduced to raise the pressure to 10 MPa, the pressure was maintained for 120 min, and then the nitrogen was discharged to obtain a PVC primary foamed body. The primary foamed body was immersed into saturated water vapor at 95°C for secondary expansion for 40 min to obtain a secondary foamed body. The secondary foamed body was placed in saturated water vapor at 60°C for 4 days of crosslinking and curing to obtain a crosslinked PVC structural foam material.

According to the method in Comparative Example 1, the crosslinked PVC structural foam prepared in Example 4 of the present invention was tested. The foam material had a density of 90 kg/cm³, an average cell size of about 86 µm, and a glass transition temperature of 97.6°C.

### Example 5

100 g of PVC resin, 30 g of CPE (chlorinated polyethylene), 20 g of TPU (thermoplastic polyurethane), 150 g of CD-MDI, 10 g of SA, 20 g of HHPA, 25 g of TMA, 3.0 g of tribasic lead sulfate, 2.0 g of dibasic lead phosphite, 1.0 g of carbon black, and 2.0 g of calcined kaolin were melted and mixed at 150°C to obtain a blank with a thickness of 6 mm. The blank was put into a sealed cavity at 65°C, where carbon dioxide was introduced to raise the pressure to 12 MPa, the pressure was maintained for 120 min, and then the carbon dioxide was discharged to obtain a PVC primary foamed body. The primary foamed body was immersed into hot water at 95°C for secondary expansion for 30 min to obtain a secondary foamed body. The secondary foamed body was placed in hot water at 60°C for 4 days of crosslinking and curing to obtain a crosslinked PVC structural foam material.

According to the method in Comparative Example 1, the crosslinked PVC structural foam prepared in Example 5 of the present invention was tested. The foam material had a density of 38 kg/cm³, an average cell size of about 97 µm, and a glass transition temperature of 92.5°C.

### Example 6

100 g of PVC resin, 15 g of TPU, 15 g of CPVC (chlorinated polyvinyl chloride), 30 g of TDI, 30 g of CD-MDI, 30 g of PMDI, 30 g of MTHPA, 30 g of MHHPA, 10 g of PDMA, 2.0 g of ultrafine aluminum silicate, 2.0 g of calcium carbonate , 1.0 g of glass powder, 0.6 g of tribasic lead sulfate, 0.4 g of barium stearate, and 1.0 g of epoxy resin were melted and mixed at 150°C to obtain a blank with a thickness of 6 mm. The blank was put into a sealed cavity at 85°C, where nitrogen was introduced to raise the pressure to 8 MPa, the pressure was maintained for 120 min, and then the nitrogen was discharged to obtain a PVC primary foamed body. The primary foamed body was immersed into hot air at 70°C for secondary expansion for 50 min to obtain a secondary foamed body. The secondary foamed body was placed in hot water at 60°C for 4 days of crosslinking and curing to obtain a crosslinked PVC structural foam material.

According to the method in Comparative Example 1, the crosslinked PVC structural foam prepared in Example 6 of the present invention was tested. The foam material had a density of 60 kg/cm³, an average cell size of about 93 µm, and a glass transition temperature of 100. 1°C.

### Example 7

100 g of PVC resin, 100 g of PMDI, 30 g of TPU, 1.0 g of calcium stearate, and 2.0 g of barium stearate were melted and mixed at 150°C to obtain a blank with a thickness of 6 mm. The blank was put into a sealed cavity at 90°C, where carbon dioxide was introduced to raise the pressure to 10 MPa, the pressure was maintained for 120 min, and then the carbon dioxide was discharged to obtain a PVC primary foamed body. The primary foamed body was immersed into hot water at 90°C for secondary expansion for 30 min to obtain a secondary foamed body. The secondary foamed body was placed in hot water at 60°C for 4 days of crosslinking and curing to obtain a crosslinked PVC structural foam material.

According to the method in Comparative Example 1, the crosslinked PVC structural foam prepared in Example 7 of the present invention was tested. The foam material had a density of 46 kg/cm³, an average cell size of about 140 µm, and a glass transition temperature of 98.3°C.

### Example 8

100 g of PVC resin, 20 g of PMMA, 20 g of CPE, 10 g of ACR, 80 g of PMDI, 70 g of CD-MDI, 80 g of MHHPA, 2.0 g of calcined kaolin, 1.0 g of glass powder, 1.0 g of organotin heat stabilizer, and 2 g of epoxy resin were melted and mixed at 150°C to obtain a blank with a thickness of 6 mm. The blank was put into a sealed cavity at 55°C, where carbon dioxide was introduced to raise the pressure to 10 MPa, the pressure was maintained for 120 min, and then the carbon dioxide was discharged to obtain a PVC primary foamed body. The primary foamed body was immersed into hot water at 50°C for 5 days of crosslinking and curing to obtain a crosslinked PVC structural foam material.

According to the method in Comparative Example 1, the crosslinked PVC structural foam prepared in Example 8 of the present invention was tested. The foam material had a density of 80 kg/cm³, an average cell size of about 60 µm, and a glass transition temperature of 97.8°C.

The method for preparing a crosslinked polyvinyl chloride structural foam material provided by the present invention has significant advantages. The foaming method adopted in the present invention is not limited by the technical requirements for paste materials in the prior art, and foaming can be realized by mixing polymers with different properties. The method of melting and mixing adopted in the present invention greatly improves the fusion between various components, and improves the glass transition temperature of the foam material and the uniformity of the cell structure. In the present invention, during the whole process of the preparation of a crosslinked polyvinyl chloride structural foam material, the duration of the high-temperature heating experienced by PVC is greatly shortened, and the thermal stability requirements for the system are greatly reduced. The present invention uses a foaming gas such as carbon dioxide or nitrogen as a foaming agent, and an inorganic component as a nucleating agent, causing no AIBN decomposition residue and AC residue, the process and product are environmentally friendly, and the cost is low. In the preparation method of the present invention, the melting and mixing time is short, the foaming temperature is low for immersing with a foaming agent, greatly reducing the overall energy consumption of the process.

The above are only preferred embodiments of the present invention. It should be noted that for those of ordinary skill in the art, multiple improvements and modifications can also be made without departing from the principle of the present invention, and these improvements and modifications should be considered as the protection scope of the present invention.

## Claims

1. A method for preparing a crosslinked polyvinyl chloride structural foam material, comprising:
melting and mixing a polyvinyl chloride resin, a modified resin, an isocyanate, an anhydride, a nucleating agent and a heat stabilizer to obtain a blank;
immersing the blank into a foaming gas for foaming to obtain a foamed body; and
subjecting the foamed body to crosslinking and curing to obtain a crosslinked polyvinyl chloride structural foam material.

2. The method according to claim 1, wherein the modified resin is selected from the group consisting of polymethyl methacrylate, methyl methacrylate-butyl acrylate copolymer, styrene-acrylonitrile copolymer, chlorinated polyvinyl chloride, chlorinated polyethylene, thermoplastic polyurethane and a mixture thereof.

3. The method according to claim 1, wherein the isocyanate is selected from the group consisting of toluene diisocyanate, carbodiimide-uretonimine modified 4,4'-diphenylmethane diisocyanate, polymethylene polyphenyl polyisocyanate and a mixture thereof.

4. The method according to claim 1, wherein the anhydride is selected from the group consisting of phthalic anhydride, maleic anhydride, succinic anhydride, tetrahydrophthalic anhydride, hexahydrophthalic anhydride, methyl tetrahydrophthalic anhydride, methyl hexahydrophthalic anhydride, trimellitic anhydride, pyromellitic dianhydride and a mixture thereof.

5. The method according to claim 1, wherein the nucleating agent is selected from the group consisting of nano silicon dioxide, carbon black, calcined kaolin, molecular sieve, ultrafine aluminum silicate, calcium carbonate, glass powder and a mixture thereof.

6. The method according to claim 1, wherein the heat stabilizer is selected from the group consisting of calcium stearate, zinc stearate, barium stearate, organotin heat stabilizer, tribasic lead sulfate, dibasic lead phosphite, epoxy soybean oil, epoxy resin and a mixture thereof.

7. The method according to claim 1, wherein the foaming gas is selected from carbon dioxide or nitrogen.

8. The method according to claim 1, wherein the foamed body is obtained by:
under the action of pressure, immersing the blank in a foaming gas, and then relieving the pressure to obtain a foamed body;
wherein the pressure is 6-15 MPa.

9. The method according to claim 1, wherein a mass ratio of the polyvinyl chloride resin, modified resin, isocyanate, anhydride, nucleating agent and heat stabilizer is 100:(0-50):(30-150):(0-80):( 0-5): (1-5).

10. A crosslinked polyvinyl chloride structural foam material prepared by the method according to claim 1.
